# EUROPEAN PATENT SPECIFICATION

(11) **EP 3 202 613 B1**
(45) Date of publication and mention of the grant of the patent: **15.08.2018**
(21) Application number: 16305122.0
(22) Date of filing: 04.02.2016
(51) Int. Cl.: B60N 2/06, B60N 2/015, B60N 2/68, B60N 2/24, B61D 33/00, B61D 1/04

(54) **SEAT MOUNT FOR DISPLACEABLE ATTACHMENT TO A RAILWAY VEHICLE FLOOR**
SITZHALTERUNG ZUR VERSCHIEBBAREN BEFESTIGUNG AN EINEN SCHIENENFAHRZEUGBODEN
SUPPORT DE SIÈGE POUR LA FIXATION DÉPLAÇABLE SUR UN PLANCHER DE VÉHICULE FERROVIAIRE

(43) Date of publication of application: 09.08.2017
(73) Proprietor: ALSTOM Transport Technologies, 93400 Saint-Ouen (FR)
(72) Inventor: UTHE, Bernd, 39397 Schwanebeck (DE); KREYENMEIER, Jan, 38118 Braunschweig (DE)
(74) Representative: Lavoix

(56) References cited:
- EP-A1- 0 197 167
- EP-A1- 0 364 358
- DE-A1- 4 336 710
- NL-A- 9 101 074
- NL-C2- 1 024 362
- US-A- 4 118 062

## Description

The present invention relates to a seat mount for mounting a passenger seat into a passenger compartment of a railway vehicle, the seat mount comprising:
- an outer side adapted to be arranged in proximity to a sidewall of said passenger compartment;
- an inner side adapted to be arranged in proximity to an aisle of said passenger compartment;
- a lower side adapted to be arranged in proximity to a floor of said passenger compartment;
- an upper side located opposite to the lower side;
- a supporting pedestal adapted to stand on the floor of said passenger compartment and to transmit the weight of passengers sitting on said passenger seat to the floor when the seat mount is installed in said passenger compartment ; and
- an outer guiding and attachment device, which is arranged at said outer side of the seat mount, wherein said outer guiding and attachment device is arranged at the lower side of the seat mount and is adapted for displaceably attaching the seat mount to said floor.
A seat mount is known from Figs. 4 and 5 of document EP 2 727 791 A1. The drawback of this seat mount design is that the sidewall of the passenger compartment into which the seat mount is installed must be sturdy. Indeed, since the seat mount is attached to the sidewall, the sidewall is subjected to stress by the seat mount. Also, the sidewall must be fitted with a guiderail.

Document FR 2 979 316 A1 discloses another known seat mount with sidewall attachment.

EP 0 364 358 A1 discloses a seat support, of the cantilever type, for public transport vehicles as well as a seat equipped with this support.

DE 43 36 710 A1 discloses a reversible seat for public transport vehicle capable of moving a back rest across bench seat.

NL 1 024 362 C2 discloses a seat with a fixture system for its releasable installation in a bus.

NL 9 101 074 A discloses a seat for a vehicle, vessel or aircraft, which is provided with a foot device and a seat device which rests thereon, the foot device being located on only one side of the seat device, at least virtually along its edges.

US 4 118 062 A discloses cantilevered seats having blowers located below the seats for blowing into the interior of the vehicle air of controlled temperature or humidity.

EP 0 197 167 A1 discloses a two-abreast passenger seat for use in land, sea and air vehicles, comprising a seat frame which can accommodate seat cushions and to which are pivotably linked two seat backs consisting of a rectangular frame with a cushion overlay, and a support structure supporting the seat.

Hence, it is an object of the present invention to provide a seat mount that is compatible with a passenger compartment having lightweight and standard sidewalls.

According to the invention, the above object is achieved with the above-defined seat mount , characterised in that two passenger seats are foreseen to be mounted on the seat mount, and that the supporting pedestal is set back a distance from the inner side of the seat mount such that the supporting pedestal is at a position where it is centered between the two passenger seats. By relocating the outer guiding and attachment device to the bottom of the seat mount and adapting it for attachment to the floor of the passenger compartment, the sidewall no longer has to support the seat mount. Accordingly, the sidewall can be standardised and made lighter.

It is a further object of the present invention to provide a seat mount that can be displaced inside the passenger compartment after its installation therein.

Yet a further object of the present invention is to provide a seat mount that does not interfere with the cleaning of the passenger compartment.

According to preferred embodiments, the inventive seat mount may include one, several or all of the following features, in all technically feasible combinations:
- the outer guiding and attachment device includes at least one attachment flange, which preferably is adapted to project obliquely towards the floor of the passenger compartment in the installed state of the seat mount;
- the seat mount further includes a front side and a back side, wherein the outer guiding and attachment device has exactly two attachment flanges, and wherein the two attachment flanges are preferably located on the front side and the back side, respectively;
- the supporting pedestal is a hollow box;
- the seat mount and preferably the supporting pedestal includes air outlets for ventilating the passenger compartment;
- a supporting frame, which interconnects the supporting pedestal and the outer guiding and attachment device;
- the supporting frame includes one or more beams, such as L-beams, for fixing a passenger seat to the seat mount, the one or more beams extending between the outer side and the inner side of the seat mount;
- a housing made of one or more panels, which housing is adapted to prevent dirt from accumulating on the floor below the supporting frame in the installed state of the seat mount;
- the housing includes one or more lateral wings adapted to act as a panelling for said sidewall of the passenger compartment in the installed state of the seat mount; and
- a rubbish bin and/or a foot rest.

The invention also relates to a railway vehicle comprising:
- a passenger compartment including a floor, the floor having a guiderail at one outer lateral end; and
- a seat mount as defined above installed in the passenger compartment,
wherein the outer guiding and attachment device is attached to the guiderail such that the seat mount can be switched between:
- a fastened configuration in which the seat mount's position inside the passenger compartment is fixed; and
- an adjustment configuration in which the seat mount can be displaced within the passenger compartment along said guiderail.

According to preferred embodiments, the inventive railway vehicle may include one, several or all of the following features, in all technically feasible combinations:
- the seat mount is attached to the passenger compartment only via said guiderail;
- the guiderail is part of a multi-purpose mounting profile, said profile being part of the floor of the passenger compartment; and
- two passenger seats which are mounted to the seat mount, a luggage stowage space being defined next to the supporting pedestal and below the passenger seat.

Exemplary embodiments of the invention will now be described in detail with reference to the drawings, wherein:
Figure 1 presents the seat mount according to the invention installed in a passenger compartment;
Figure 2 illustrates how the inventive seat mount is attached to the floor of the passenger compartment;
Figure 3 shows a detailed view of a seat mount according to the invention;
Figure 4 illustrates a variant of a lateral support of the invention; and
Figure 5 shows a seat pair underframe of the invention between the inventive seat mount and a seat pair.

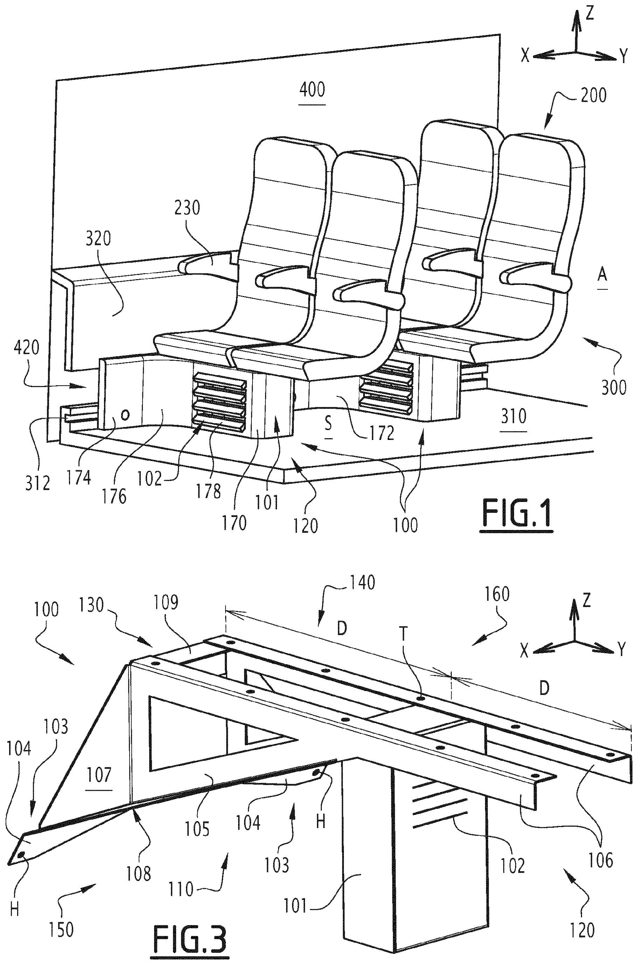

With reference to figure 1, there is shown a section of a passenger compartment 300 of a railway vehicle (not shown). The railway vehicle can drive forward or backward along the X-axis of the represented Cartesian coordinate system.

In the present specification, the terms "front", "forward" and "back", "backward", "behind" are defined according to the longitudinal axis X in accordance with the orientation of the coordinate system of figure 1. The terms "inner" and "outer" or "lateral" are defined according to the transversal axis Y in accordance with the orientation of the coordinate system of figure 1. The transversal Y-axis points from the outer side of the passenger compartment 300 to its inner side. The terms "upper" and "lower" are defined according to the vertical axis Z in accordance with the orientation of the coordinate system of figure 1. The vertical Z-axis points from the bottom of the passenger compartment 300 to its top. The axes X, Y and Z of the coordinate system are naturally perpendicular to each other.

The passenger compartment 300 of figure 1 shows two seat mounts 100 with each two mounted passenger seats 200.

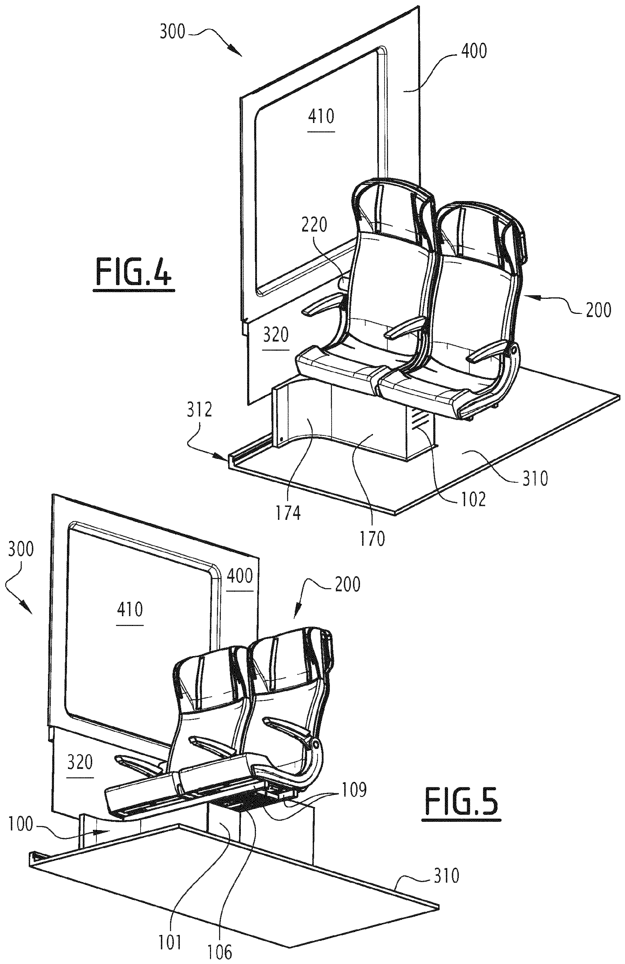

The passenger compartment 300 is extending parallel to the longitudinal axis X of the railway vehicle and is limited in a lateral direction Y by two sidewalls 400 of the railway vehicle. The sidewalls 400 of the railway vehicle may comprise windows 410 (cf. Fig. 4) and doors (not shown).

The sidewalls 400 are made out of light material and have no fixation means for mounting the seat mounts 100. This allows reducing production costs of the sidewalls 400.

This further has the advantage that the weight of a carbody of the railway vehicle is reduced.

The passenger compartment 300 has a floor 310 supporting the weight of the seat mounts 100 and the passenger seats 200 when the seat mounts 100 and the passenger seats 200 are installed in the passenger compartment 300.

The floor 310 is made of identical panels, which panels are free of fixation means for mounting the seat mounts 100. This allows reducing production costs of the floor 310.

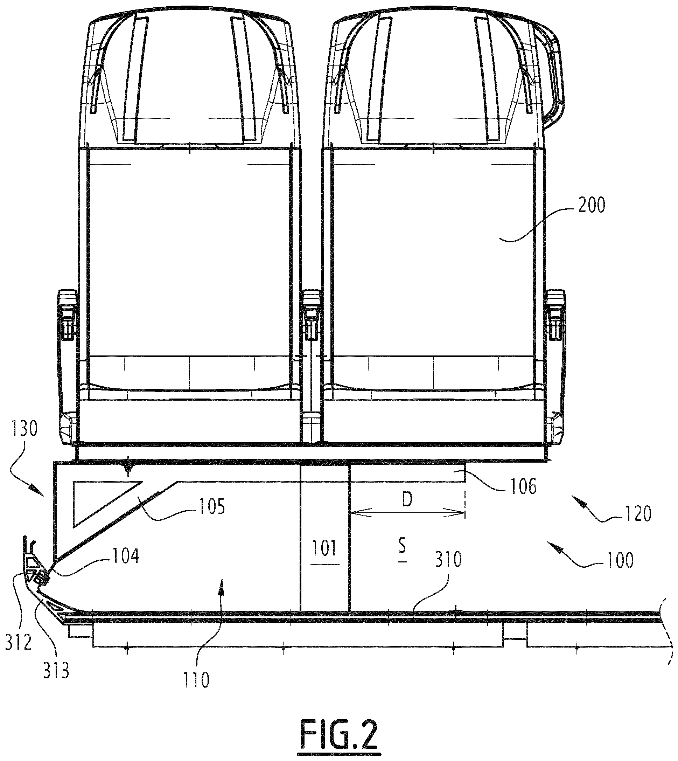

The floor 310 carries a guide rail 312 extending parallel to the longitudinal axis X. The guide rail 312 can have a profile forming a C. The guide rail 312 is preferably part of a multi-purpose mounting profile 313 (cf. Fig. 2).

The passenger compartment 300 further has a sidewall paneling 320 covering the sidewall 400 at least partially. The sidewall paneling 320 is extending parallel to the longitudinal axis X and partially parallel to the vertical axis Z.

Figures 2 and 3 show in detail the structure of the seat mount 100 of which two specimen are shown in Fig. 1.

The seat mount 100 has a lower side 110 which is in contact with the floor 310 of the passenger compartment 300. The seat mount 100 has an inner side 120 which is arranged in proximity to an aisle A of the passenger compartment 300. The seat mount 100 has an outer side 130 which is arranged in proximity to the sidewall 400. The outer side 130 is in contact with the sidewall paneling 320.

The seat mount 100 has an upper side 140 opposite to the lower side 110. The upper side 140 is in contact with the passenger seats 200. More specifically, the passenger seats 200 are mounted on the upper side 140 of the seat mount 100. The seat mount 100 has a front side 150 and a back side 160.

The seat mount 100 has a supporting pedestal 101 adapted to stand on the floor 310 of the passenger compartment 300 when the seat mount 100 is in an installed state.

In a preferred embodiment, the supporting pedestal 101 is a hollow box. The hollow box is advantageously made out of a metal sheet or an Aluminum sandwich.

The supporting pedestal 101 is set back a distance D from the inner side 120 of the seat mount 100 (cf. Fig. 2). The distance D defines a position of the supporting pedestal 101 at which the supporting pedestal is centered between the two seats 200.

Such a location of the supporting pedestal 101 allows balancing the weight of the two seats 200 mounted on the seat mount 100.

In more detail, it allows minimization of vertical tilting-forces acting on the seat mount 100 trying to tilt the seat mount 100 about a tilting axis parallel to the longitudinal axis X, when the seat mount 100 is mounted in the passenger compartment 300.

The supporting pedestal 101 allows transferring a maximum of the weight resting on the seat mount 100 directly to the floor, when the seat mount 100 is installed in the passenger compartment 300.

The supporting pedestal 101 can have air outlets 102 adapted to allow an air-stream to flow out of the seat mount 100 into a surrounding volume. In other words, when the seat mount 100 is mounted in the passenger compartment 300, the air outlets 102 can be used to provide the passenger compartment 300 with warm or cold air in order to air-condition the passenger compartment 300.

It is in particular advantageous to locate air outlets of an air-conditioning system directly below the seats 200 in the seat mount 100, because in this way a warm air-stream will first warm-up the feet and legs of passengers and then will ascend substantially parallel to the vertical axis Z along the seats 200 in order to warm-up the body of the passengers.

An air outlet 102 in the supporting pedestal 101 allows optimized ventilation of the passenger compartment 300.

As shown in Fig. 1, the air outlets 102 may alternatively also be provided on a housing 170 of the seat mount 100.

With reference to Fig. 3, the seat mount 100 comprises a guiding and attachment device 103 which is arranged at the outer side 130 and the lower side 110 of the seat mount 100.

The guiding and attachment device 103 is adapted for displaceably attaching the seat mount 100 to the floor 310 of the passenger compartment 300 via the guide rail 312.

The seat mount 100 is attached to the floor 310 only through the guiding and attachment device 103.

The guiding and attachment device 103 has an adjustment configuration in which the seat mount 100 can be displaced along the guiderail 312 in the passenger compartment 300. For example, in the adjustment configuration, the seat mount 100 can be slid along the guiderail 312 of the passenger compartment 300. When the seat mount 100 is slid in this way, the supporting pedestal 101 slides on the floor 310.

The guiding and attachment device 103 has a fastened configuration in which the seat mount 100 is securely fixed to the guiderail 312, thereby locking the seat mount 100 into place on the floor 310.

The guiding and attachment device 103 allows easy and quick relocation of the seat mounts 100 inside the passenger compartment 300. The guiding and attachment device 103 also allows easy and fast mounting of the seat mounts 100 in the passenger compartment 300.

The guiding and attachment device 103 comprises at least one attachment flange 104 adapted to project obliquely towards the floor 310 of the passenger compartment 300 when the seat mount 100 is installed in the passenger compartment 300.

Preferably, each attachment flange 104 comprises a hole H configured to fix the seat mount 100, for example with a screw and a sliding block, to the guiderail 312.

In the preferred embodiment, the front side 150 of the seat mount 100 comprises an attachment flange 104 and the back side 160 of the seat mount 100 comprises an attachment flange 104. Thus, the guiding and attachment device 103 can have exactly two attachment flanges 104.

The two attachment flanges 104 are on opposite sides and therefore allow a secure fastening of the seat mount 100 to the guide rail 312.

More particularly, when the seat mount 100 is installed in the passenger compartment 300 and a horizontal tilting force is acting on the seat mount 100 trying to tilt the seat mount 100 about a vertical tilting axis parallel to the vertical axis Z, the two attachment flanges 104 effectively receive such a tilting force in order to solidly maintain the fixed position of the seat mount 100 on the guiderail 312.

The seat mount 100 further comprises a supporting frame 105 which interconnects the supporting pedestal 101 and the outer guiding and attachment device 103. The supporting frame 105 stabilizes the seat mount 100. Furthermore, the supporting frame 105 allows transmission of tilting forces acting on the seat mount 100 to the outer guiding and attachment device 103 when the seat mount 100 is in the installed state.

The supporting frame 105 is made out of one piece, for example a folded die-cut metal sheet.

The supporting frame 105 includes one or more beams 106, such as L-beams, for fixing the passenger seats 200 to the seat mount 100.

The seats 200 are fixed to the seat mount 100 in a conventional manner. For example, the beams 106 have mounting holes T for mounting the seats 200 with screws.

The beams 106 extend between the outer side 130 and the inner side 120 of the seat mount 100.

In the preferred embodiment, the beams 106 extend from the outer side 130 to the inner side 120 beyond the supporting pedestal 101, such that a luggage stowage space S is defined below a passenger seat 200 in the area of the inner side 120 of the seat mount 100.

The luggage stowage space S gives more comfort to a passenger sitting behind a first seat mount 100, when several seat mounts 100 are installed in a passenger compartment 300.

The beams 106 are fixed to the supporting pedestal 101 in a conventional way, for example by welding, screws or a rivet joint.

The supporting frame 105 comprises at least one triangular stabilization section 107 extending between one beam 106 and one attachment flange 104. The triangular stabilization section 107 extends parallel to a plane defined by the longitudinal axis X and the vertical axis Z. The triangular stabilization section 107 provides additional stability to the seat mount 100.

The supporting frame 105 may comprise at least one oblique and curved stabilization sheet 108 connecting the same to the attachment flange 104. The oblique and curved stabilization sheet 108 provides additional stability to the seat mount 100.

The seat mount 100 comprises a housing 170 covering the front and the back of the supporting frame 105. The housing 170 is in sealing contact with the floor 310.

The housing 170 can consist of one or more panels 172.

The housing 170 prevents dirt from accumulating on the floor 310 below the supporting frame 105, when the seat mount 100 is installed in the passenger compartment 300.

The housing 170 includes one or more lateral wings 174, which act as a paneling for the sidewall 400 of the passenger compartment 300 in the installed state of the seat mount 100.

The lateral wings 174 are in sealing contact with the sidewall paneling 320. This increases the aesthetic appearance of the passenger compartment 300.

Each lateral wing 174 can include an intermediate section 176 extending between the front or back side 150, 160 and the side wall 400.

The shape of the intermediate section 176, when projected on the floor 310, is an arc shape.

The arc shape of the intermediate section 176 allows easy and accurate cleaning of the floor 310, for example with automatic cleaning machines. Accordingly, the costs for cleaning the floor 310 of the passenger compartment 300 are reduced.

The housing 170, and in particular the lateral wing 174 and the intermediate section 176 can be formed out of glass-fiber reinforced plastic.

As an alternative, these elements can also be formed out of a casted metal, such as casted Aluminum.

The housing 170 may include the air outlets 102 of the seat mount 100. The air outlets 102 can comprise air-guiding means 178 for directing an air-stream into the passenger compartment 300.

The seat mount 100 may include a rubbish bin (not shown). The rubbish bin may be covered by a movable panel allowing access to the rubbish bin inside the seat mount 100.

The seat mount 100 may also include a foot rest (not shown). The foot rest may be formed by a panel on the back side 160 of the seat mount 100.

The sidewall 400 may comprise an air tunnel 420 extending parallel to the longitudinal axis X. The air tunnel 420 can supply a conditioned air stream to the passenger compartment 300.

The air tunnel 420 can have at least one opening (not shown) oriented in a lateral direction Y, which guides the conditioned air stream into the seat mount 100.

The conditioned air stream can be guided inside the seat mount 100 towards the air outlets 102 of the seat mount 100.

As shown in figures 1 and 4, the seat 200 next to the outer end 130 of the seat mount 100 may have a lateral support 220, 230. The lateral support may be a bumper 220 mounted on a lateral side of a back rest of the seat 200, which bridges the gap between the sidewall panelling 320 and said back rest. The lateral support may also be an arm rest 230 of the seat 200, as shown in figure 1.

The lateral support 220, 230 is in sliding contact with the sidewall paneling 320. The lateral support 220, 230 is configured to counter a vertical tilting-force acting on the seat mount 100 and trying to tilt the same about a tilting axis extending in the guiderail 312.

In other words, the lateral support 220, 230 helps preventing that the seat mount 100 may be lifted up.

Figure 5 shows a seat pair underframe 109, which is arranged between the seat mount 100 and the pair of seats 200. The seat pair underframe 109 fixes the two seats 200 together so that they form an integral seat group. This seat group is fastened to the seat mount 100 by fastening means such as screws that fasten the beams 106 to the seat pair underframe 109.

It should be noted that the invention is not limited to the above embodiments.

The skilled person will appreciate that a main advantage of the above-described seat mount 100 according to the invention is that its supporting pedestal 101 is in contact with the floor over a large surface area. This allows transferring a maximum of the passenger weight directly to the floor.

## Claims

1. A seat mount (100) for mounting a passenger seat (200) into a passenger compartment (300) of a railway vehicle, the seat mount comprising:
- an outer side (130) adapted to be arranged in proximity to a sidewall (400) of said passenger compartment (300);
- an inner side (120) adapted to be arranged in proximity to an aisle of said passenger compartment (300);
- a lower side (110) adapted to be arranged in proximity to a floor (310) of said passenger compartment (300);
- an upper side (140) located opposite to the lower side;
- a supporting pedestal (101) adapted to stand on the floor of said passenger compartment and to transmit the weight of passengers sitting on said passenger seat (200) to the floor when the seat mount is installed in said passenger compartment ; and
- an outer guiding and attachment device (103), which is arranged at said outer side of the seat mount,
wherein said outer guiding and attachment device is arranged at the lower side of the seat mount and is adapted for displaceably attaching the seat mount to said floor,
**characterized in that** two passenger seats (200) are foreseen to be mounted on the seat mount (100), and
that the supporting pedestal (101) is set back a distance from the inner side (120) of the seat mount (100) such that the supporting pedestal (101) is at a position where it is centered between the two passenger seats (200).

2. The seat mount of claim 1, wherein the outer guiding and attachment device (103) includes at least one attachment flange (104), which preferably is adapted to project obliquely towards the floor of the passenger compartment in the installed state of the seat mount (100).

3. The seat mount of claim 2, wherein the seat mount (100) further includes a front side (150) and a back side (160), wherein the outer guiding and attachment device (103) has exactly two attachment flanges (104), and wherein the two attachment flanges are preferably located on the front side (150) and the back side (160), respectively.

4. The seat mount of any one of the previous claims, wherein the supporting pedestal (101) is a hollow box.

5. The seat mount of any one of the previous claims, wherein the seat mount and preferably the supporting pedestal (101) includes air outlets (102) for ventilating the passenger compartment (300).

6. The seat mount of any one of the previous claims, further comprising a supporting frame (105), which interconnects the supporting pedestal (101) and the outer guiding and attachment device (103).

7. The seat mount of claim 6, wherein the supporting frame (105) includes one or more beams (106), such as L-beams, for fixing a passenger seat (200) to the seat mount (100), the one or more beams extending between the outer side (130) and the inner side (120) of the seat mount.

8. The seat mount of claims 6 or 7, further comprising a housing (170) made of one or more panels (172), which housing is adapted to prevent dirt from accumulating on the floor (310) below the supporting frame (105) in the installed state of the seat mount.

9. The seat mount of claim 8, wherein the housing (170) includes one or more lateral wings (174) adapted to act as a panelling for said sidewall (400) of the passenger compartment in the installed state of the seat mount (100).

10. The seat mount of any one of the previous claims, further including a rubbish bin and/or a foot rest.

11. A railway vehicle comprising:
- a passenger compartment (300) including a floor (310), the floor having a guiderail (312) at one outer lateral end; and
- a seat mount according to any one of the previous claims installed in the passenger compartment,
wherein the outer guiding and attachment device (103) is attached to the guiderail (312) such that the seat mount can be switched between:
- a fastened configuration in which the seat mount's position inside the passenger compartment (300) is fixed; and
- an adjustment configuration in which the seat mount (100) can be displaced within the passenger compartment along said guiderail.

12. The railway vehicle according to claim 11, wherein the seat mount (100) is attached to the passenger compartment only via said guiderail (312).

13. The railway vehicle according to claim 11 or 12, wherein the guiderail (312) is part of a multi-purpose mounting profile, said profile being part of the floor (310) of the passenger compartment.

14. The railway vehicle according to any one of claims 11 to 13, further comprising two passenger seats (200) which are mounted to the seat mount (100), a luggage stowage space being defined next to the supporting pedestal (101) and below the passenger seat (200).

## Patentansprüche

1. Sitzhalterung (100) zur Montage eines Passagiersitzes (200) in ein Passagierabteil (300) eines Schienenfahrzeugs, wobei die Sitzhalterung Folgendes umfasst:
- eine äußere Seite (130), die ausgelegt ist, um in der Nähe einer Seitenwand (400) des Passagierabteils (300) angeordnet zu sein;
- eine innere Seite (120), die ausgelegt ist, um in der Nähe eines Gangs des Passagierabteils (300) angeordnet zu sein;
- eine untere Seite (110), die ausgelegt ist, um in der Nähe eines Bodens (310) des Passagierabteils (300) angeordnet zu sein;
- eine obere Seite (140), die sich gegenüber der unteren Seite befindet;
- einen Trägersockel (101), der ausgelegt ist, um auf dem Boden des Passagierabteils zu stehen, und um das Gewicht von Passagieren, die auf dem Passagiersitz (200) sitzen, auf den Boden zu übertragen, wenn die Sitzhalterung in dem Passagierabteil installiert ist; und
- eine äußere Führungs- und Befestigungsvorrichtung (103), die an der äußeren Seite der Sitzhalterung angeordnet ist,
wobei die eine äußere Führungs- und Befestigungsvorrichtung an der unteren Seite der Sitzhalterung angeordnet und ausgelegt ist, um die Sitzhalterung verschiebbar an den Boden zu befestigen,
**dadurch gekennzeichnet, dass** vorgesehen ist, dass zwei Passagiersitze (200) auf die Sitzhalterung (100) montiert werden, und
dass der Trägersockel (101) um einen Abstand von der inneren Seite (120) der Sitzhalterung (100) zurückversetzt ist, so dass sich der Trägersockel (101) in einer Position befindet, in der zwischen den zwei Passagiersitzen (200) zentriert ist.

2. Sitzhalterung nach Anspruch 1, wobei eine äußere Führungs- und Befestigungsvorrichtung (103) mindestens einen Befestigungsflansch (104) einschließt, der vorzugsweise ausgelegt ist, um schräg hin zum Boden des Passagierabteils im installierten Zustand der Sitzhalterung (100) vorzuspringen.

3. Sitzhalterung nach Anspruch 2, wobei die Sitzhalterung (100) weiter eine vordere Seite (150) und eine hintere Seite (160) einschließt, wobei die äußere Führungs- und Befestigungsvorrichtung (103) exakt zwei Befestigungsflansche (104) aufweist, und wobei sich die zwei Befestigungsflansche vorzugsweise auf der vorderen Seite (150) bzw. der hinteren Seite (160) befinden.

4. Sitzhalterung nach einem der vorhergehenden Ansprüche, wobei der Trägersockel (101) ein hohler Kasten ist.

5. Sitzhalterung nach einem der vorhergehenden Ansprüche, wobei die Sitzhalterung und vorzugsweise der Trägersockel (101) Luftauslässe (102) zur Belüftung des Passagierabteils (300) einschließt.

6. Sitzhalterung nach einem der vorhergehenden Ansprüche, weiter umfassend einen Stützrahmen (105), der den Trägersockel (101) und die äußere Führungs- und Befestigungsvorrichtung (103) miteinander verbindet.

7. Sitzhalterung nach Anspruch 6, wobei der Stützrahmen (105) ein oder mehrere Querträger (106) einschließt, wie z. B. L-Querträger, um einen Passagiersitz (200) an die Sitzhalterung (100) zu fixieren, wobei sich der eine oder die mehreren Querträger zwischen der äußeren Seite (130) und der inneren Seite (120) der Sitzhalterung erstrecken.

8. Sitzhalterung nach Anspruch 6 oder 7, weiter umfassend ein Gehäuse (170), das aus einem oder aus mehreren Paneelen (172) hergestellt ist, wobei das Gehäuse ausgelegt ist, um zu verhindern, dass sich Verschmutzungen auf dem Boden (310) unter dem Stützrahmen (105) im installierten Zustand der Sitzhalterung ansammeln.

9. Sitzhalterung nach Anspruch 8, wobei das Gehäuse (170) ein oder mehrere seitliche Flügel (174) umfasst, die ausgelegt sind, um als eine Verkleidung für die Seitenwand (400) des Passagierabteils im installierten Zustand der Sitzhalterung (100) zu dienen.

10. Sitzhalterung nach einem der vorhergehenden Ansprüche, weiter umfassend einen Abfalleimer und/oder eine Fußstütze.

11. Schienenfahrzeug, umfassend:
- ein Passagierabteil (300), darin eingeschlossen einen Boden (310), wobei der Boden eine Führungsschiene (312) an einem äußeren lateralen Ende aufweist; und
- eine Sitzhalterung nach einem der vorhergehenden Ansprüche, die im Passagierabteil installiert ist,
wobei die äußere Führungs- und Befestigungsvorrichtung (103) an die Führungsschiene (312) befestigt ist, so dass die Sitzhalterung geschaltet werden kann zwischen:
- einer befestigten Konfiguration, in der die Position der Sitzhalterung innerhalb des Passagierabteils (300) fixiert ist; und
- einer Einstellungskonfiguration, in der die Sitzhalterung (100) innerhalb des Passagierabteils entlang der Führungsschiene verschoben werden kann.

12. Schienenfahrzeug nach Anspruch 11, wobei die Sitzhalterung (100) an das Passagierabteil nur über die Führungsschiene (312) befestigt ist.

13. Schienenfahrzeug nach Anspruch 11 oder 12, wobei die Führungsschiene (312) Teil eines Vielzweck-Montageprofils ist, wobei das Profil Teil des Bodens (312) des Passagierabteils ist.

14. Schienenfahrzeug nach einem der Ansprüche 11 bis 13, weiter umfassend zwei Passagiersitze (200), die auf die Sitzhalterung (100) montiert sind, einen Gepäckstauraum, der neben dem Trägersockel (101) und unter dem Passagiersitz (200) definiert ist.

## Revendications

1. Support de siège (100) pour monter un siège de passager (200) dans un compartiment de passagers (300) d'un véhicule ferroviaire, le support de siège comprenant :
un côté externe (130) adapté pour être agencé à proximité d'une paroi latérale (400) dudit compartiment de passagers (300) ;
un côté interne (120) adapté pour être agencé à proximité d'une allée dudit compartiment de passagers (300) ;
un côté inférieur (110) adapté pour être agencé à proximité d'un plancher (310) dudit compartiment de passagers (300) ;
un côté supérieur (140) positionné à l'opposé du côté inférieur ;
un socle de support (101) adapté pour se dresser sur le plancher dudit compartiment de passagers et pour transmettre le poids des passagers assis sur ledit siège de passager (200) au plancher lorsque le support de siège est installé dans ledit compartiment de passagers ; et
un dispositif de guidage et de fixation externe (103) qui est agencé au niveau dudit côté externe du support de siège,
dans lequel ledit dispositif de guidage et de fixation externe est agencé du côté inférieur du support de siège et est adapté pour fixer, de manière déplaçable, le support de siège sur ledit plancher,
**caractérisé en ce que** l'on prévoit de monter deux sièges de passager (200) sur le support de siège (100), et **en ce que** le socle de support (101) est positionné à une distance du côté interne (120) du support de siège (100) de sorte que le socle de support (101) est dans une position dans laquelle il est centré entre les deux sièges de passager (200).

2. Support de siège selon la revendication 1, dans lequel le dispositif de guidage et de fixation externe (103) comprend au moins une bride de fixation (104) qui est de préférence adaptée pour faire saillie, de manière oblique, vers le plancher du compartiment de passagers, à l'état installé du support de siège (100).

3. Support de siège selon la revendication 2, dans lequel le support de siège (100) comprend en outre un côté avant (150) et un côté arrière (160), dans lequel le dispositif de guidage et de fixation externe (103) a exactement deux brides de fixation (104), et dans lequel les deux brides de fixation sont de préférence positionnées sur le côté avant (150) et le côté arrière (160) respectivement.

4. Support de siège selon l'une quelconque des revendications précédentes, dans lequel le socle de support (101) est un caisson creux.

5. Support de siège selon l'une quelconque des revendications précédentes, dans lequel le support de siège et de préférence le socle de support (101) comprennent des sorties d'air (102) pour l'aération du compartiment de passagers (300).

6. Support de siège selon l'une quelconque des revendications précédentes, comprenant en outre un bâti de support (105) qui interconnecte le socle de support (101) et le dispositif de guidage et de fixation externe (103).

7. Support de siège selon la revendication 6, dans lequel le bâti de support (105) comprend une ou plusieurs poutres (106), telles que des poutres en L, pour fixer un siège de passager (200) sur le support de siège (100), les une ou plusieurs poutres s'étendant entre le côté externe (130) et le côté interne (120) du support de siège.

8. Support de siège selon les revendications 6 ou 7, comprenant en outre un boîtier (170) réalisé à partir d'un ou de plusieurs panneaux (172), lequel boîtier est adapté pour empêcher l'accumulation de saleté sur le plancher (310) au-dessous du bâti de support (105) à l'état installé du support de siège.

9. Support de siège selon la revendication 8, dans lequel le boîtier (170) comprend une ou plusieurs ailes latérales (174) adaptées pour servir d'habillage pour ladite paroi latérale (400) du compartiment de passagers, à l'état installé du support de siège (100).

10. Support de siège selon l'une quelconque des revendications précédentes, comprenant en outre une poubelle et/ou un repose-pied.

11. Véhicule ferroviaire comprenant :
un compartiment de passagers (300) comprenant un plancher (310), le plancher ayant un rail de guidage (312) au niveau d'une extrémité latérale externe ; et
un support de siège selon l'une quelconque des revendications précédentes, installé dans le compartiment de passagers,
dans lequel le dispositif de guidage et de fixation externe (103) est fixé au rail de guidage (312) de sorte que le support de siège peut être commuté entre :
une configuration fixée dans laquelle la position du support de siège à l'intérieur du compartiment de passagers (300) est fixe ; et
une configuration de réglage dans laquelle le support de siège (100) peut être déplacé dans le compartiment de passagers le long dudit rail de guidage.

12. Véhicule ferroviaire selon la revendication 11, dans lequel le support de siège (100) est fixé au compartiment de passagers uniquement via ledit rail de guidage (312).

13. Véhicule ferroviaire selon la revendication 11 ou 12, dans lequel le rail de guidage (312) fait partie d'un profilé de montage universel, ledit profilé fait partie du plancher (310) du compartiment de passagers.

14. Véhicule ferroviaire selon l'une quelconque des revendications 11 à 13, comprenant en outre deux sièges de passager (200) qui sont montés sur le support de siège (100), un espace de rangement de bagages étant défini à côté du socle de support (101) et au-dessous du siège de passager (200).
